# EUROPÄISCHE PATENTANMELDUNG

(11) **EP 3 952 060 A1**
(43) Veröffentlichungstag der Anmeldung: **09.02.2022**
(21) Anmeldenummer: 20189124.9
(22) Anmeldetag: 03.08.2020
(51) Int. Cl.: H02K 1/14, H02K 15/02

(54) **VERFAHREN ZUM HERSTELLEN EINES BLECHPAKETES FÜR EINEN ROTOR ODER STATOR UND BLECHPAKET EINER ELEKTRISCHEN MASCHINE**

(71) Anmelder: Fischer & Kaufmann GmbH & Co. KG, 57413 Finnentrop (DE)
(72) Erfinder: GASTREICH, Jan, 57413 Finnentrop (DE); HEUTGER, Tobias, 59846 Sundern (DE); BISCHOPINK, Jürgen, 57462 Olpe (DE)
(74) Vertreter: Wunderlich & Heim Patentanwälte Partnerschaftsgesellschaft mbB

(57) **Zusammenfassung**

Ein Herstellungsverfahren eines Blechpaketes für einen Rotor oder Stator einer elektrischen Maschine, wobei das Blechpaket aus einem Stapel von Blechlamellen hergestellt wird, welche aus Teilsegmenten zusammengesetzt werden. Jedes Teilsegment weist eine radiale Außenkante, eine radiale Innenkante sowie zwei Seitenkanten auf und wurde aus einem Blechband ausgestanzt. Die Bandlängsrichtung entspricht der Walzrichtung des Blechbandes. Erste Teilsegmente werden gleich zueinander ausgerichtet in einer ersten Reihe und zweite Teilsegmente werden gleich zueinander ausgerichtet in einer zweiten Reihe auf dem Blechband angeordnet und ausgestanzt. Dabei liegen die erste Reihe und die zweite Reihe in Bandlängsrichtung des Blechbandes nebeneinander liegen. Deren jeweiligen radialen Außenkanten oder radialen Innenkanten verlaufen ungefähr quer zur Bandlängsrichtung und die zweiten Teilsegmente sind gegengleich zu den ersten Teilsegmenten auf dem Blechband angeordnet.

## Beschreibung

Die Erfindung betrifft ein Verfahren zum Herstellen eines Blechpaketes für einen Rotor und/oder einen Stator einer elektrischen Maschine, wobei das Blechpaket aus einem Stapel von scheiben- oder ringförmigen Blechlamellen hergestellt wird, welche aus Teilsegmenten zusammengesetzt werden, welche jeweils eine radiale Außenkante, eine radiale Innenkante sowie zwei Seitenkanten aufweisen, wobei die Teilsegmente aus einem Blechband ausgestanzt werden, welches eine Bandlängsrichtung aufweist, welche einer Walzrichtung des Blechbandes entspricht, gemäß dem Oberbegriff des Anspruchs 1.

Die Erfindung betrifft weiterhin einen Stator oder einen Rotor einer elektrischen Maschine, welche mit einem Blechpaket gebildet ist, gemäß dem Oberbegriff des Anspruchs 8.

Ein gattungsbildendes Verfahren geht beispielsweise aus der DE 100 37 804 A1 hervor. Bei diesem Verfahren wird aus einem gewalzten Blechband mit einer gegebenen Walzrichtung ein Vollring für einen ringförmigen Stator ausgestanzt, wobei innerhalb des inneren Ausstoßes Teilsegmente zum Bilden eines weiteren Stators angeordnet und ausgestanzt werden. Gegenüber einem Ausstanzen fertiger ringförmiger Statoren wird durch die vorgeschlagene Nutzung auch des inneren kreisförmigen Ausstoßes eine verbesserte Materialausnutzung erzielt.

Ein vergleichbarer Stand der Technik ist auch aus dem Dokument EP 2 693 604 A1 bekannt. Hierin wird zunächst auch ein hinlänglich bekanntes Verfahren beschrieben, bei welchem ringförmige Blechlamellen zum Bilden eines Stators aufeinanderfolgend aus einem Blechband ausgestanzt werden. Zur Verbesserung der Materialausnutzung wird gelehrt, die ringförmigen Blechlamellen in Teilsegmente aufzugliedern, so dass eine verbesserte Materialnutzung erzielt werden kann.

Eine Segmentierung von ringförmigen Blechlamellen zum Bilden eines Stators ist auch aus der US 2012/0119599 A1 oder der GB 2310545 A bekannt.

Neben einer wirtschaftlichen Nutzung des Blechbandes ist für einen Stator auch eine gute Eigenschaft hinsichtlich des magnetischen Flusses von wesentlicher Bedeutung.

Der Erfindung liegt die **Aufgabe** zugrunde, einen Stator und/oder einen Rotor für eine elektrische Maschine besonders wirtschaftlich und zugleich mit guten elektromagnetischen Eigenschaften herzustellen.

Die Aufgabe wird zum einen durch ein Verfahren mit den Merkmalen des Anspruchs 1 und zum anderen durch einen Stator beziehungsweise Rotor mit den Merkmalen des Anspruchs 8 gelöst. Bevorzugte Ausführungsformen der Erfindung sind in den jeweils abhängigen Ansprüchen angegeben.

Das erfindungsgemäße Verfahren ist dadurch gekennzeichnet, dass zum Ausstanzen aus dem Blechband erste Teilsegmente in einer ersten Reihe und zweite Teilsegmente in einer zweiten Reihe angeordnet und ausgestanzt werden, wobei die erste Reihe und die zweite Reihe in Bandlängsrichtung des Blechbandes verlaufen und nebeneinanderliegen, dass die ersten Teilsegmente in der ersten Reihe gleich zueinander ausgerichtet werden, wobei die radiale Außenkante und/oder die radiale Innenkante quer zur Bandlängsrichtung verlaufen, und dass die zweiten Teilsegmente in der zweiten Reihe gleich zueinander mit quer zur Bandlängsrichtung verlaufenden radialen Außenkanten und/oder radialen Innenkanten, aber gegengleich zu den ersten Teilsegmenten in der ersten Reihe auf dem Blechband angeordnet werden.

Eine Grundidee der Erfindung liegt zunächst darin, die Blechlamellen für ein Blechpaket zum Bilden eines ringförmigen Stators oder eines scheibenförmigen Rotors in Teilsegmente aufzuteilen, welche zu dem Stator beziehungsweise dem Rotor zusammengesetzt werden können. Hierdurch können die Teilsegmente besonders wirtschaftlich auf einem Blechband angeordnet werden, um einen Ausstoß gering zu halten.

Darüber hinaus liegt ein Aspekt der Erfindung darin, dass die einzelnen Teilsegmente nicht beliebig auf einem Blechband angeordnet und ausgestanzt werden. Vielmehr wird eine Reihenanordnung der Teilsegmente vorgesehen, wobei diese Reihen in Längsrichtung eines Blechbandes verlaufen, welche gleichzeitig eine Walzrichtung des Blechbandes ist.

Beim Walzen eines Blechbandes ergibt sich verfahrensbedingt eine Streckung der Metallkörner im Blechband in Walzlängsrichtung beziehungsweise in Bandlängsrichtung. Dabei werden die Teilsegmente in jeder Reihe gleich oder parallel zueinander so angeordnet, dass die radialen Außenkanten und/oder die radialen Innenkanten quer zur Bandlängsrichtung verlaufen. Somit weisen die Teilsegmente in ihrer radialen Richtung vorzugsweise eine gestreckte Form der Materialkörner im Metallgefüge auf. Diese radial gerichtete Streckung und Ausrichtung des Korngefüges in den Blechlamellen ist vorteilhaft für den Magnetfluss und das elektromagnetische Verhalten bei der Nutzung in einer elektrischen Maschine, insbesondere einem Elektromotor oder einem elektrischen Generator. Hierdurch kann der Wirkungsgrad der elektrischen Maschine erhöht werden.

Dabei wird eine besonders wirtschaftliche und technisch vorteilhafte Anordnung der Teilsegmente dadurch erzielt, dass mindestens zwei Reihen von Teilsegmenten entlang der Bandlängsrichtung nebeneinander gewählt werden, wobei erste Teilsegmente in der ersten Reihe gleich zueinander ausgerichtet sind, während die zweiten Teilsegmente in der zweiten Reihe um 180° hierzu und damit gegengleich zur Anordnung in der ersten Reihe angeordnet und ausgestanzt werden. Hierdurch können nahezu gleiche und gleichbleibende elektromagnetische Eigenschaften in allen Teilsegmenten aufgrund der weitgehend gleichen Ausrichtung der metallischen Körnung des Blechbandes in einer radialen Richtung der bogenförmigen Teilsegmente erzielt werden.

Bei einem Zusammensetzen der Teilsegmente zu dem Stator oder dem Rotor können so auch über den Umfang nahezu gleiche radiale Ausrichtungen der Metallkörnung und damit nahezu gleiche elektromagnetische Eigenschaften erzielt werden. Dies ist vorteilhaft für einen besonders gleichmäßigen Lauf oder Betrieb einer elektrischen Maschine, welche aus einem Stator und/oder einem Rotor hergestellt sind, welche mit Blechpaketen mit so hergestellten Teilsegmenten aufgebaut sind. Grundsätzlich können die ersten Teilsegmente und die zweiten Teilsegmente unterschiedlich zueinander ausgebildet sein, insbesondere eine unterschiedliche Größe und/oder einen unterschiedlichen Bogenausschnitt aufweisen. Besonders vorteilhaft ist es nach einer Weiterbildung der Erfindung, dass die ersten Teilsegmente und die zweiten Teilsegmenten gleich ausgebildet sind. Dies erlaubt eine besonders wirtschaftliche Fertigung auch aus günstigeren Blechqulitäten..

Hinsichtlich der Dimensionierung der Teilsegmente ist es für eine möglichst gleichgerichtete Anordnung und Streckung des Korngefüges in einer radialen Richtung eines Stators oder eines Rotors zweckmäßig, wenn ein Kreisbogenausschnitt oder ein Kreisbogenwinkel des jeweiligen Teilsegmentes möglichst klein ist und insbesondere zwischen 20° und 120° beträgt. Besonders zweckmäßig ist es nach einer Ausführungsform der Erfindung, dass die Teilsegmente als Viertelkreisbogensegmente ausgebildet sind. Bei einem Viertelkreisbogensegment erstreckt sich die Blechlamelle über einen Bogen von 90° des Umfangs des Stators oder des Rotors. Dabei wird der Stator beziehungsweise der Rotor über den Umfang aus insgesamt vier Teilsegmenten zusammengesetzt. Es können jedoch auch nur drei Teilsegmente mit jeweils 120° oder mehr Teilsegmente vorgesehen sein, etwa fünf Teilsegmente mit je 72°, sechs Teilsegmente mit je 60° etc.

Für ein Zusammensetzen der Teilsegmente zu einem Vollumfang ist es nach einer Ausführungsvariante der Erfindung weiterhin vorteilhaft, dass zum Bilden einer Nut-Feder-Verbindung beim Zusammensetzen der Teilsegmente jedes Teilsegment mit einer Nut an einer ersten Seitenkante und mit einer dazu passenden Feder an der gegenüberliegenden zweiten Seitenkante ausgestanzt wird. Die Nut-Feder-Verbindung ist somit in Umfangsrichtung gerichtet. Diese kann eine einfache zusammensteckbare Nut-Feder-Verbindung sein oder zusätzlich eine Hinterschneidung aufweisen, wie etwa bei einer Schwalbenschwanz-Verbindung, um einen Formschlusseffekt auch in Umfangsrichtung zu bewirken. Eine Feder im Sinne der Erfindung ist insbesondere eine Nase oder ein Vorsprung an einer Seitenkante des Teilsegments, wobei die Nase passend zur Nut ausgebildet ist.

Die Teilsegmente richten sich nach der Form eines ringförmigen Stators oder eines scheibenförmigen Rotors, welcher üblicherweise mit einer Mittenöffnung zum Aufbringen auf eine Welle ausgebildet ist. Eine bevorzugte Ausführungsform der Erfindung besteht dabei darin, dass die Teilsegmente radial gerichtete Stege aufweisen, welche im Wesentlichen in Bandlängsrichtung ausgerichtet werden. Die radial gerichteten Stege sind dabei vorzugsweise an einer radialen Innenkante der Teilsegmente angeordnet. Vorzugsweise können die Stege nach dem Stanzen wärmebehandelt werden, um eine weitere Verbesserung der Gefügekörnung zu erreichen.

Für einen Magnetfluss ist es insbesondere in diesen radial gerichteten Stegen vorteilhaft, dass eine radial gerichtete Streckung der Gefügekörnung in diesen Bereichen gegeben ist.

Ein Blechpaket kann aus wenigen Blechlamellen bis zu einigen einhundert Blechlamellen aufgebaut sein. Die Dicke einer Blechlamelle kann vorzugsweise zwischen 0,1 mm bis zu 2 mm betragen. Für ein axiales Stapeln der Blechlamellen ist es nach einer Weiterbildung der Erfindung vorteilhaft, dass die Teilsegmente für ein Stanzpaketieren mit Formschlusselementen senkrecht zur Bandebene versehen werden. Insbesondere können quer zur Bandebene auf einer Bandseite Einprägungen vorgenommen werden, welche an der gegenüberliegenden Seite der Blechlamelle zu einem Vorsprung führen. Die Formschlusselemente können dabei nicht nur als Einprägungen, sondern auch als Stanzungen und Abkantungen ausgebildet sein. Ergänzend oder alternativ kann ein Verkleben den Blechlamellen erfolgen.

Besonders wirtschaftlich ist es nach einer erfindungsgemäßen Verfahrensvariante, dass dieses auf einer Presse mit mindestens einem Stanzwerkzeug und vorzugsweise mindestens einem Prägewerkzeug durchgeführt wird. Gegebenenfalls kann auch mindestens ein Biegewerkzeug an der Presse vorgesehen werden. Vorzugsweise sind bei mehreren Werkzeugen diese als ein Folgeverbundwerkzeug in einer einzelnen Presse ausgebildet. Dabei sind die einzelnen Werkzeuge in Reihe hintereinander angeordnet, wobei nach jedem Pressenhub das teilbearbeitete Werkstück zu dem nachfolgenden Werkzeug übergeben wird.

Die Erfindung betrifft weiterhin einen Stator oder Rotor einer elektrischen Maschine, welche mit einem Blechpaket gebildet sind, welches erfindungsgemäß mit Teilsegmenten nach dem zuvor beschriebenen Verfahren hergestellt ist. Eine elektrische Maschine im Sinne der Erfindung kann insbesondere ein Elektromotor oder ein elektrischer Generator sein. Vorzugsweise ist dabei der Stator ringförmig aus ringförmigen Blechlamellen und/oder der Rotor aus scheibenförmigen Blechlamellen aufgebaut.

Besonders vorteilhaft ist es dabei nach einer Weiterbildung der Erfindung, dass der scheibenförmige Rotor beziehungsweise der ringförmige Stator nur aus ersten Teilsegmenten oder nur aus zweiten Teilsegmenten gebildet ist. Durch das Herstellen des Rotors und des Stators nur aus Teilsegmenten aus einer einzelnen Reihe können besonders gleichmäßige magnetische Flusseigenschaften in dem Bauteil und damit ein hoher Wirkungsgrad bei einer elektrischen Maschine erzielt werden.

Alternativ ist es nach einer Weiterbildung der Erfindung vorgesehen, dass der scheibenförmige Rotor beziehungsweise der ringförmige Stator aus ersten Teilsegmenten und aus zweiten Teilsegmenten gebildet ist. Hierdurch wird die Fertigung insgesamt vereinfacht, wobei weiterhin aufgrund der weitgehend gleichgerichteten Körnung in dem Blechband gute magnetische Flusseigenschaften in den Bauteilen erzielt werden.

Weiterhin umfasst die Erfindung eine elektrische Maschine, insbesondere einen Elektromotor oder einen Generator, welche dadurch gekennzeichnet sind, dass ein Stator und/oder Rotor gemäß der Erfindung verbaut ist.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine perspektivische Ansicht eines erfindungsgemäß aufgebauten Stators;
- Fig. 2: eine perspektivische Ansicht eines erfindungsgemäß aufgebauten Rotors;

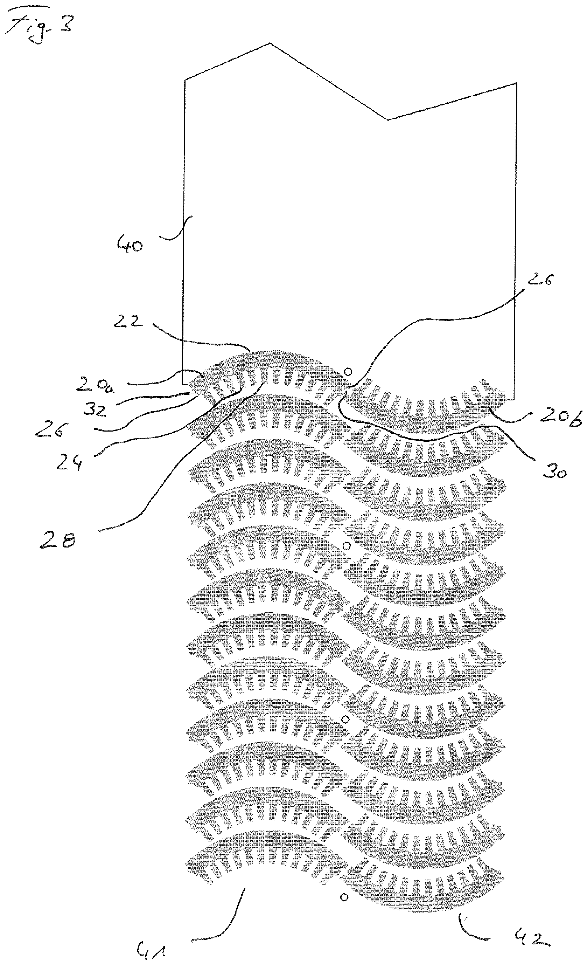

- Fig. 3: eine perspektivische Ansicht der erfindungsgemäßen Anordnung von Teilsegmenten auf einem Blechband;
- Fig. 4: ein Zusammensetzen eines Statorrings aus vier Teilsegmenten; und
- Fig. 5: eine Draufsicht auf einen zusammengesetzten Statorring.

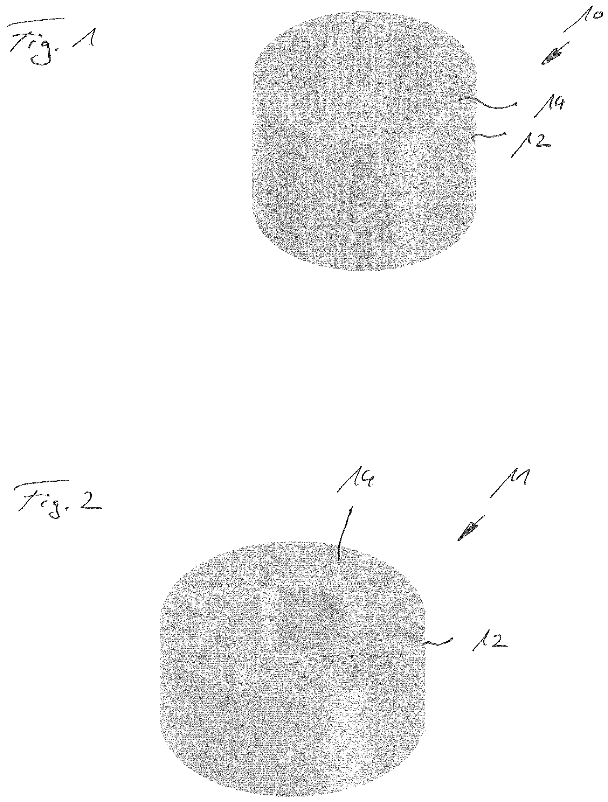

In Fig. 1 ist ein erfindungsgemäß hergestellter Stator 10 für einen Elektromotor dargestellt, wobei der Stator 10 ein Blechpaket 12 aus einer Vielzahl von axial aufeinander gestapelten ringförmigen Blechlamellen 14 gebildet ist.

In Fig. 2 ist ein erfindungsgemäß hergestellter Rotor 11 aus einem Blechpaket 12 aus im Wesentlichen scheibenförmigen Blechlamellen 14 aufgebaut. Der Aufbau eines Stators 10 oder eines Rotors 11 aus einer Vielzahl von dünnen Blechlamellen 14 verbessert das elektromagnetische Verhalten des Elektromotors oder eines entsprechenden Elektrogenerators und damit den Wirkungsgrad der entsprechenden elektrischen Maschine.

Zur weiteren Verbesserung des Wirkungsgrades werden die einzelnen Blechlamellen 14 in Teilsegmente 20 aufgeteilt, welche in einer erfindungsgemäßen Weise auf einem Blechband 40 in zumindest zwei Reihen, nämlich einer ersten Reihe 41 und einer zweiten Reihe 42, in Längsrichtung des Blechbandes 40 angeordnet und so ausgestanzt werden. Die Erfindung beruht dabei auf der Erkenntnis, dass bei einem Walzen, insbesondere einem Kaltwalzen, eines Blechbandes 40 sich in Walzrichtung eine Streckung und Ausrichtung des Korngefüges in dem Metallmaterial einstellt. Eine derartige Streckung und Ausrichtung des Korngefüges kann nach einer Erkenntnis der Erfindung den Wirkungsgrad einer elektrischen Maschine verbessern, wenn diese Streckung möglichst einheitlich in einer radialen Richtung bei einem Stator 10 oder einem Rotor 11 gegeben ist.

Eine derartige Ausrichtung wird gemäß der Erfindung dadurch erzielt, dass eine Ringform in mehrere bogenförmige Teilsegmente aufgeteilt wird, welche nur geringfügig von einer Geraden abweichen. In der ersten Reihe 41 werden erste Teilsegmente 20a in Längsrichtung des Blechbandes 40 hintereinander und gleich ausgerichtet. Dabei verlaufen eine radiale Außenkante 22 und eine radiale Innenkante 24, an welcher radial gerichtete Stege 28 ausgebildet werden, im Wesentlichen quer zur Längsrichtung des Blechbandes 40. Gleichzeitig können an einer ersten Seitenkante 26 eines Teilsegmentes 20 eine Nut 30 und an einer zweiten Seitenkante 26 des gleichen Teilsegmentes 20 eine vorspringende Feder 32 ausgebildet werden. Die etwa V-förmige Nut 30 und die dazu passend pfeilartig ausgebildete Feder 32 sind insgesamt so gestaltet, dass diese formschlüssig zum Bilden einer Nut-Feder-Verbindung ineinandergreifen können.

Eine sehr gute Materialausnutzung des Blechbandes 40 wird nach der Erfindung weiter dadurch erzielt, dass in der zweiten Reihe 42 die zweiten Teilsegmente 20b gegengleich zu den ersten Teilsegmenten 20a in der ersten Reihe 41 auf dem Blechband 40 angeordnet und aus diesem ausgestanzt werden. Trotz der um 180° in Längsrichtung des Blechbandes 40 gedrehten Anordnung der zweiten Teilsegmente 20b wird eine weitgehend gleich gute Ausrichtung der zweiten Teilsegmente 20b in Längsrichtung und damit auch in Walzrichtung des Blechbandes 40 wie bei den ersten Teilsegmenten 20a in der ersten Reihe 41 erzielt.

Die ersten Teilsegmente 20a in der ersten Reihe 41 und die zweiten Teilsegmente 20b in der zweiten Reihe 42 sind dabei so nebeneinander angeordnet, dass sich die jeweiligen Seitenkanten 26 mit den Nuten 30 unmittelbar gegenüberliegen, so dass in besonders materialsparender Weise kein oder nur ein geringfügiger Zwischensteg zwischen den beiden Teilsegmenten 20a, 20b verbleibt. Die jeweiligen Seitenkanten 26 mit den vorspringenden Federn 32 sind dabei jeweils nach außen gerichtet.

Nach dem Ausstanzen der Teilsegmente 20 können die Stege 28 an der jeweiligen Innenkante 24 noch besonders wärmebehandelt werden, wobei beispielsweise durch ein Lösungsglühen ein noch feineres Korngefüge in diesen Materialbereichen eingestellt werden kann.

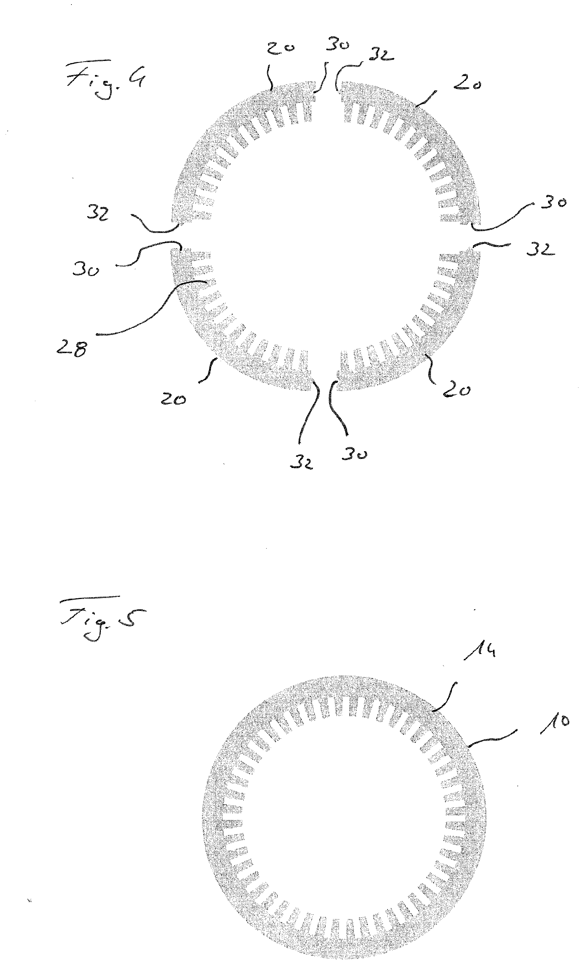

Wie anschaulich in den Figuren 4 und 5 dargestellt ist, werden bei diesem bevorzugten Ausführungsbeispiel die Teilsegmente 20 als ein Viertelkreisbogensegment ausgebildet, so dass insgesamt vier Teilsegmente 20 zu einem Ring eines Stators 10 zusammengesetzt werden können. Dabei werden die Teilsegmente 20 jeweils so zueinander angeordnet, dass sich die seitliche Nut 30 und die seitliche Feder 32 von zwei benachbarten Teilsegmenten 20 jeweils gegenüberliegen. Durch entsprechendes Zusammensetzen kann so eine geschlossene ringförmige Blechlamelle 14 für einen Stator 10 gebildet werden. Dabei können die einzelnen Teilsegmente 20 vor einem Zusammensetzen zu einem Ring zuvor axial gestapelt werden, so dass entsprechende Blechpakete 12 miteinander zum Bilden eines Ringes zusammengesetzt werden. Alternativ kann zunächst auch eine einzelne ringförmige Lamelle 14 zusammengesetzt werden, wobei dann anschließend eine Vielzahl zusammengesetzter Blechlamellen 14 axial zu dem Blechpaket 12 für einen Stator 10 gestapelt werden. In entsprechender Weise kann mit einem Rotor 11 verfahren werden, welcher ebenfalls aus mehreren Teilsegmenten 20 zusammengesetzt werden kann.

## Patentansprüche

1. Verfahren zum Herstellen eines Blechpaketes (12) für einen Rotor (11) und/oder einen Stator (10) einer elektrischen Maschine, wobei das Blechpaket (12) aus einem Stapel von scheiben- oder ringförmigen Blechlamellen (14) hergestellt wird, welche aus Teilsegmenten (20) zusammengesetzt werden, welche jeweils eine radiale Außenkante (22), eine radiale Innenkante (24) sowie zwei Seitenkanten (26, 27) aufweisen, wobei die Teilsegmente (20) aus einem Blechband (40) ausgestanzt werden, welches eine Bandlängsrichtung aufweist, welche einer Walzrichtung des Blechbandes (40) entspricht,
**dadurch gekennzeichnet,**
**dass** zum Ausstanzen aus dem Blechband (40) erste Teilsegmente (20a) in einer ersten Reihe (41) und zweite Teilsegmente (20b) in einer zweiten Reihe (42) angeordnet und ausgestanzt werden, wobei die erste Reihe (41) und die zweite Reihe (42) in Bandlängsrichtung des Blechbandes (40) verlaufen und nebeneinander liegen,
**dass** die ersten Teilsegmente (20a) in der ersten Reihe (41) gleich zueinander ausgerichtet werden, wobei die radiale Außenkante (22) und/oder die radiale Innenkante (24) quer zur Bandlängsrichtung verlaufen, und
**dass** die zweiten Teilsegmente (20b) in der zweiten Reihe (42) gleich zueinander mit quer zur Bandlängsrichtung verlaufenden radialen Außenkanten (22) und/oder radialen Innenkanten (24), aber gegengleich zu den ersten Teilsegmenten (20a) in der ersten Reihe (41) auf dem Blechband (40) angeordnet werden.

2. Verfahren nach Anspruch 1,
**dadurch gekennzeichnet,**
**dass** die ersten Teilsegmente (20a) und die zweiten Teilsegmente (20b) gleich ausgebildet werden.

3. Verfahren nach Anspruch 1 oder 2,
**dadurch gekennzeichnet,**
**dass** die Teilsegmente (20) als Viertelkreisbogensegmente ausgebildet werden.

4. Verfahren nach einem der Ansprüche 1 bis 3,
**dadurch gekennzeichnet,**
**dass** zum Bilden einer Nut-Feder-Verbindung beim Zusammensetzen der Teilsegmente (20) jedes Teilsegment (20) mit einer Nut (30) an einer ersten Seitenkante (26) und mit einer dazu passenden Feder (32) an der gegenüberliegenden zweiten Seitenkante (27) ausgestanzt wird.

5. Verfahren nach einem der Ansprüche 1 bis 4,
**dadurch gekennzeichnet,**
**dass** die Teilsegmente (20) radial gerichtete Stege (28) aufweisen, welche im Wesentlichen in Bandlängsrichtung ausgerichtet werden.

6. Verfahren nach einem der Ansprüche 1 bis 5,
**dadurch gekennzeichnet,**
**dass** die Teilsegmente (20) für ein Stanzpaketieren mit Formschlusselementen senkrecht zur Bandebene versehen werden.

7. Verfahren nach einem der Ansprüche 1 bis 6,
**dadurch gekennzeichnet,**
**dass** das Verfahren auf einer Presse mit mindestens einem Stanzwerkzeug und vorzugsweise mindestens einem Prägewerkzeug durchgeführt wird.

8. Stator oder Rotor (11) einer elektrischen Maschine, welche mit einem Blechpaket (12) gebildet sind,
**dadurch gekennzeichnet,**
**dass** das Blechpaket (12) mit Teilsegmenten (20) nach einem Verfahren nach einem der Ansprüche 1 bis 7 hergestellt ist.

9. Stator oder Rotor (11) nach Anspruch 8,
**dadurch gekennzeichnet,**
**dass** der scheibenförmige Rotor (11) beziehungsweise der ringförmige Stator (10) nur aus ersten Teilsegmenten (20a) oder nur aus zweiten Teilsegmenten (20b) gebildet ist.

10. Stator oder Rotor (11) nach Anspruch 8,
**dadurch gekennzeichnet,**
**dass** der scheibenförmige Rotor (11) beziehungsweise der ringförmige Stator (10) aus ersten Teilsegmenten (20a) und aus zweiten Teilsegmenten (20b) gebildet ist.

11. Elektrische Maschine, insbesondere Elektromotor oder Generator,
**dadurch gekennzeichnet,**
**dass** ein Stator (10) und/oder Rotor (11) nach einem der Ansprüche 8 bis 10 vorgesehen ist.
